Europäisches Patentamt

European Patent Office

Office européen des brevets

(11) Numéro de publication: **0 394 086**

**A1**

# DEMANDE DE BREVET EUROPEEN

(21) Numéro de dépôt: **90400916.4**

(22) Date de dépôt: **04.04.90**

(51) Int. Cl.⁵: **F16B 25/00, B60N 3/04**

(30) Priorité: **18.04.89 FR 8905429**

(43) Date de publication de la demande:
**24.10.90 Bulletin 90/43**

(84) Etats contractants désignés:
**AT BE CH DE ES FR GB GR IT LI LU NL SE**

(71) Demandeur: **FACAM S.A.**
**39 rue du Pré Catelan**
**F-59562 La Madeleine Cédex(FR)**

(72) Inventeur: **De Gastines, Gérard**
**143 Avenue de la République**
**F-59110 La Madeleine(FR)**

(74) Mandataire: **Ecrepont, Robert**
**Cabinet Ecrepont 12 Place Simon Vollant**
**F-59800 Lille(FR)**

(54) **Dispositif de fixation sur son support d'un élément souple de revêtement tel un morceau de moquette ou un tapis.**

(57) L'invention se rapporte à un dispositif de fixation sur son support d'un élément souple de revêtement tel un morceau de moquette ou un tapis.

Il est caractérisé en ce que, pour éviter le desserrage, il comprend sous la collerette (7) des protubérances (11) en forme de dents et en ce que ces dents sont inclinées de manière, dans le sens du serrage, à glisser sur la face supérieure de la pièce sur laquelle la collerette s'applique et à s'ancrer dans cette face lors du desserrage.

Fig-2-

EP 0 394 086 A1

# DISPOSITIF DE FIXATION SUR SON SUPPORT D'UN ELEMENT SOUPLE DE REVETEMENT TEL UN MORCEAU DE MOQUETTE OU UN TAPIS

L'invention se rapporte à un dispositif de fixation sur son support d'un élément souple de revêtement tel un morceau de moquette ou un tapis.

Elle s'applique plus particulièrement mais non exclusivement aux tapis de sol de véhicules automobiles.

Dans les véhicules automobiles, la tôle réalisant le fond de la caisse est garnie ou non d'une thibaude puis d'un revêtement par exemple en caoutchouc ou en moquette.

Pour prévenir l'usure du revêtement notamment à la place du conducteur, il est d'usage de faire appel à un tapis supplémentaire rapporté, par exemple, également en caoutchouc ou en moquette.

Ce tapis doit alors être fixé en un ou plusieurs points au sol ne serait ce que pour éviter de le laisser venir faire obstacle à la commande d'au moins l'une des pédales.

A cet effet, au droit des points de fixation, il est connu de percer la tôle d'un trou de faible dimension et soit d'y visser le pied du dispositif de fixation, soit par déformation élastique d'engager dans chacun d'eux le dit pied d'un dispositif de fixation qui, après avoir traversé la tôle, reprend sa forme initiale interdisant son extraction.

Le dispositif comprend généralement une collerette telle une rondelle d'appui sur le sol et par dessus la collerette des formes permettant le clipsage d'un tapis sur le dispositif et ce directement (DE-A-1.455.856) ou par l'intermédiaire d'un insert ou d'un bouton pression complémentaire (EP-A-20308 et GB-A-2.087.229).

Dans un autre mode de réalisation (FR-A-1.405.310), la forme permettant le clipsage du tapis est présentée par un plot fixé sur la tôle par une vis pénétrant dans le trou de la tôle en s'y vissant.

Même si la fixation du tapis est efficace, le perçage de la tôle du fond de caisse, qui entraîne de nombreux inconvénients tels des remontées d'humidité, constitue un vice rédhibitoire et surtout de tels trous ne peuvent être faits par l'utilisateur.

De ce fait, les dispositifs de fixation utilisés à ce jour comprennent, sous une partie supérieure quant à elle semblable à celle des dispositifs précités, un moyen de fixation coopérant essentiellement avec le tapis et/ou la thibaude.

A cet effet, on connaît un dispositif pourvu d'un pied en forme de vis à bois (EP-A-58252) qui crée son propre trou en se vissant dans le support que réalisent le tapis et/ou la thibaude de même manière qu'une simple vis du genre de celle connue pour fixer une contre semelle dans la première semelle d'une chaussure (FR-A-933.199).

Ce dispositif offre toutefois une résistance très limitée lors d'une sollicitation notamment à l'arrachement et par ailleurs, avec les vibrations dues notamments aux irrégularités de la route et trés rapidement se desserre et libère le tapis.

On connaît également (EP-A-211.960), un dispositif où au lieu d'un pied fixé sous la collerette c'est la collerette qui est réalisée en fine tôle et découpée pour y délimiter deux tronçons de spirales qui sont déployés en tronçons d'hélicoïdes de manière à permettre le vissage du dispositif dans le support.

Outre l'inconvénient de se desserrer rapidement, ce dispositif a également celui de tendre à couper les fibres des tapis et/ou thibaude et de faire deux trous au lieu d'un.

Dans un tout autre domaine d'application, à savoir celui des moyens d'ancrage ou d'amarrage dans un sol meuble, il est connu (GB-793.426) de faire appel à un organe d'attache tel une patte ou un anneau relié par une tige rectiligne à un pied en forme de longue vrille.

Etant vissé trés profondément et n'étant pas, dans cette application, soumis à des vibrations intensives, ce dispositif n'a pas tendance à se desserrer mais évidemment si la vrille était de longueur comparable à l'épaisseur d'un tapis avec sa thibaude et si le dispositif était soumis aux vibrations, tel que conçu, rien n'empêcherait le desserrage de ce dispositif.

Un des résultats que l'invention vise à obtenir est un dispositif de fixation qui assure un maintien efficace de l'élément souple sur son support.

Est également un des résultats de l'invention, un tel dispositif assurant un maintien durable du fait qu'il n'a pas tendance à se desserrer même sous des vibrations intenses.

Est encore un résultat de l'invention, un dispositif qui ne crée dans le tapis et le support qu'une perforation de trés faible dimension.

A cet effet, elle a pour objet un dispositif de fixation du type cité plus haut notamment caractérisé en ce que, pour éviter le desserrage, il comprend sous la collerette des protubérances en forme de dents et en ce que les dents sont inclinées de manière, dans le sens du serrage, à glisser sur la face supérieure de la pièce sur laquelle la collerette s'applique et à s'ancrer dans cette face lors du desserrage.

L'invention sera bien comprise à l'aide de la description ci-aprés faite à titre d'exemple non limitatif en regard du dessin ci-annexé qui représente :

- figure 1 : un tapis fixé à son support,

- figure 2 : le dispositif vu de face,
- figure 3 : le dispositif vu de dessous,
- figure 4 : une coupe selon IV-IV de la figure 3.

En se reportant au dessin, on voit que le dispositif 1 assure la fixation d'un tapis supplémentaire 2 sur un support 3 constitué d'un tapis de sol 4 et d'une thibaude 5, le tout reposant sur une tôle 6 réalisant par exemple le fond de la caisse d'un véhicule automobile.

Le dispositif 1 comprend une collerette 7 sous laquelle est prévu un moyen 8 d'ancrage dans le support 3.

Ce moyen d'ancrage consiste en une courte vrille 8.

La pente P de l'hélice de cette vrille est choisie suffisamment faible pour éviter que, par reversion, sa commande en rotation puisse résulter d'une pression axiale exercée sur cette hélice.

L'homme de l'art est à même en fonction des forces de frottement de la vrille 8 sur le matériau support à déterminer la pente optimum.

Par exemple, pour une vrille 8 d'environ 8 millimètres de diamètre extérieur en fil d'environ deux millimètres de diamètre, un pas de l'ordre de six à sept millimètres a donné une pente satisfaisante.

A l'extrémité libre 9 de la vrille (figure 4), le fil de la vrille est effilé pour faciliter sa pénétration mais poursuit globalement la même hélice.

Afin de ne pas élargir la perforation du support au delà du diamètre du fil de l'hélice de la vrille et d'assurer le serrage du fil dans la perforation, cette extrémité du fil n'est donc pas ramenée vers l'axe de la vrille.

A l'extrémité opposée 10 de la vrille 8, soit celle tournée vers la collerette 7 (figure 4), dans le cas où le tapis rapporté se fixe au dessus de la collerette (figure 4), le fil poursuit également la même hélice jusqu'à pénétration dans la collerette 7.

Afin de ne pas favoriser la rotation relative du tapis 2 et du dispositif 1, cette extrémité 10 n'est donc pas, au moins dans sa partie apparente, ni poursuivie par une tige axiale, ni même ramenée axialement.

Cette disposition a pour autre avantage d'assurer entre la collerette 7 et l'hélice 8, vu la faible pente de l'hélice, le pincement puis le coïncement du bord du tapis 2 et/ou du support en sa partie jouxtant la perforation ce qui également concourt à éviter le desserrage du dispositif 1.

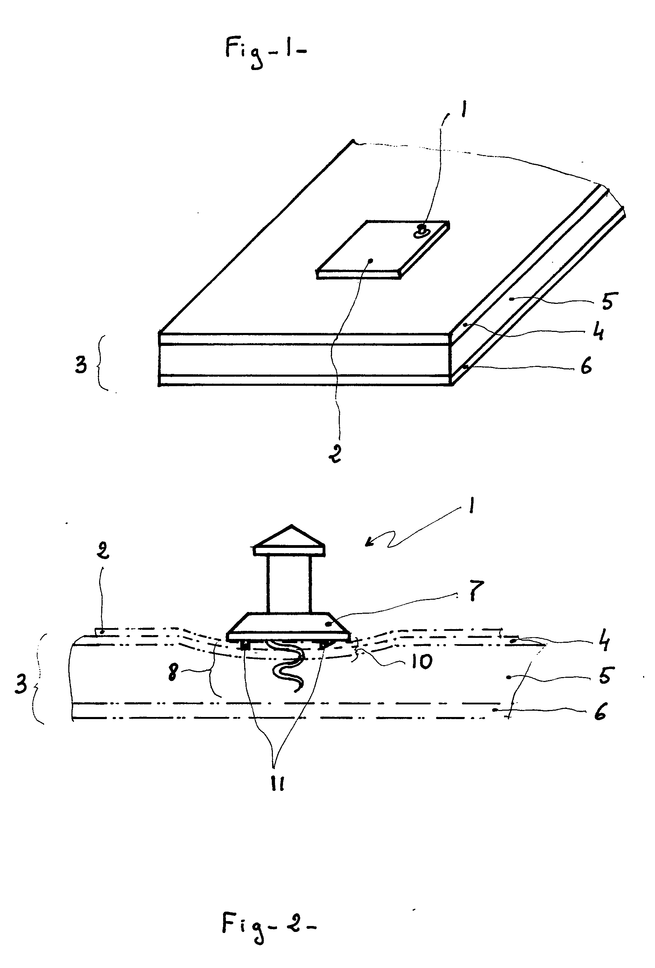

Lorsque le tapis rapporté se fixe sous la collerette (figure 2), l'extrémité 10 de la vrille 8 tournée vers la collerette est au contraire ramenée vers l'axe de la vrille avant pénétration dans la collerette 7 afin de permettre le pincement du tapis rapporté 2 entre la collerette 7 et le support 3.

Le tapis à fixer peut donc ainsi indifféremment :

- soit être fixé aprés avoir été appliqué sur le support (figures 1 et 2), la vrille traversant alors à la fois le tapis 2 et le support 3 et la collerette 7 pinçant le tout,
- soit être fixé après pose du dispositif dans le support 3 (figure 4) auquel cas, dans le tapis 2 rapporté, est prévu un perçage 12 par lequel le dispositif 1 est enfilé sur un plot 13 prévu au dessus de la collerette.

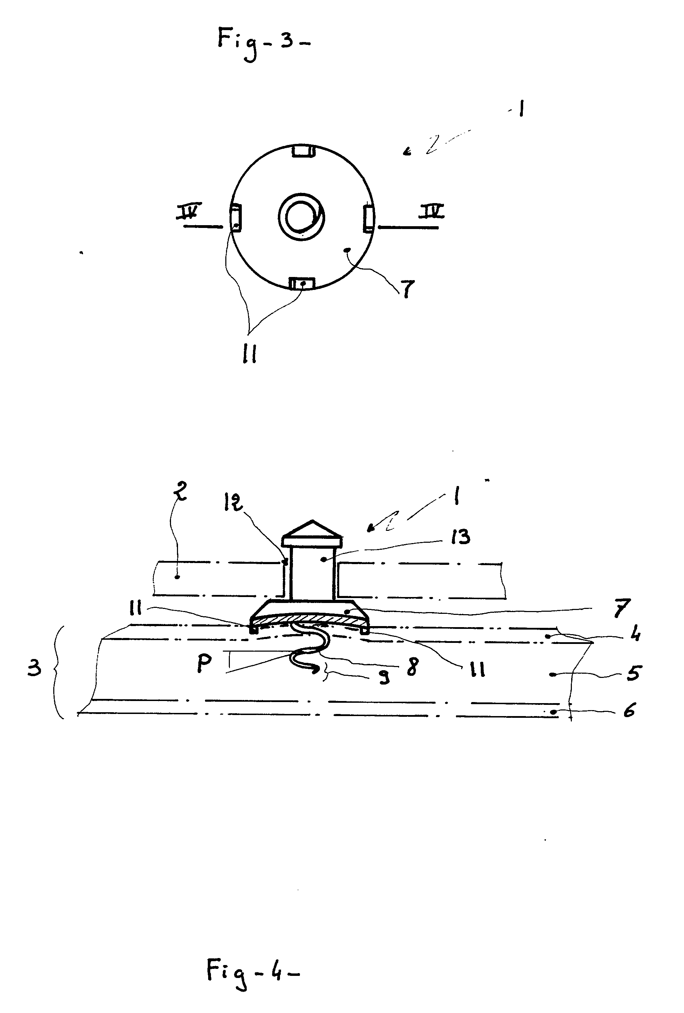

Egalement, pour éviter le desserrage, le dispositif 1 comprend sous la collerette 7 des protubérances 11 (figure 3) en forme de dents et ces dents sont inclinées de manière, dans le sens du serrage, à glisser sur la face supérieure de la pièce sur laquelle selon le mode de montage la collerette s'applique et à s'ancrer dans cette face lors du desserrage.

**Revendications**

1. Dispositif de fixation sur un support d'un élément souple de revêtement tel un morceau de moquette ou un tapis et notamment dispositif de fixation d'un tapis rapporté (2) sur un support (3) constitué d'un tapis de sol (4) et d'une thibaude (5), le tout reposant sur la tôle (6) réalisant par exemple le fond de la caisse d'un véhicule automobile, lequel dispositif (1) comprend une collerette (7) sous laquelle est prévu un moyen (8) d'ancrage dans le support (3) constitué d'une courte vrille, ce dispositif étant **CARACTERISE** en ce que, pour éviter le desserrage, il comprend sous la collerette (7) des protubérances (11) en forme de dents et en ce que ces dents sont inclinées de manière, dans le sens du serrage, à glisser sur la face supérieure de la pièce sur laquelle la collerette s'applique et à s'ancrer dans cette face lors du desserrage.

2. Dispositif selon la revendication 1 **caractérisé** en ce que la pente (P) de l'hélice de la vrille (8) est choisie suffisamment faible pour éviter que, par reversion, sa commande en rotation puisse résulter d'une pression axiale exercée sur cette hélice.

3. Dispositif selon la revendication 1 ou 2 **caractérisé** en ce qu'à l'extrémité libre (9) de la vrille, le fil de la vrille est effilé pour faciliter sa pénétration mais poursuit globalement la même hélice.

4. Dispositif selon l'une quelconque des revendications 1 à 3 **caractérisé** en ce qu'à l'extrémité (10) de la vrille (8) tournée vers la collerette, le fil poursuit la même hélice jusqu'à pénétration dans la collerette (7).

5. Dispositif selon l'une quelconque des revendications 1 à 3 **caractérisé** en ce qu'à l'extrémité (10) de la vrille (8) tournée vers la collerette, le fil rejoint l'axe et lorsque le tapis rapporté se fixe sous la collerette, l'extrémité (10) de la vrille (8) tournée vers la collerette est au contraire ramenée vers l'axe de la vrille avant pénétration dans la collerette (7) afin de permettre le pincement du tapis rapporté (2) entre la collerette (7) et le support (3).

Fig-1-

Fig-2-

Fig-3-

Fig-4-

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| D,A | EP-A-0058252 (WEGU GUMMI- UND KUNSTSTOFFWERKE WALTER DRÄBING KG) * abrégé; figure 1 * | 1 | F16B25/00 B60N3/04 |
| A | US-A-4403895 (CALDWELL ET AL.) * figures 1, 3 * | 1 | |
| A | US-A-3330012 (HART ET AL.) * colonne 2, lignes 6 - 25; figures 3, 4 * | 2, 3 | |
| A | DE-A-3238121 (HÖRSTELER TEPPICHFABRIK WILKENS & LUCKE GMBH & CO KG) * abrégé; revendication 3; figure 3 * | 1 | |
| A | EP-A-0211966 (H.BUCHAL) | | |
| A | DE-U-8320276 (FA.FRANZ MIEDERHOFF) | | |

|  | DOMAINES TECHNIQUES RECHERCHES (Int. Cl.5 ) |
|---|---|
|  | F16B B60N |

Le présent rapport a été établi pour toutes les revendications

| Lieu de la recherche | Date d'achèvement de la recherche | Examinateur |
|---|---|---|
| BERLIN | 05 JUILLET 1990 | SCHAEFFLER C.A.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)